**Europäisches Patentamt**

**European Patent Office**

**Office européen des brevets**

(19)

(11) Veröffentlichungsnummer : **0 361 220 B1**

(12) **EUROPÄISCHE PATENTSCHRIFT**

(45) Veröffentlichungstag der Patentschrift :
**03.06.92 Patentblatt 92/23**

(51) Int. Cl.⁵ : **C01B 17/34**

(21) Anmeldenummer : **89117013.6**

(22) Anmeldetag : **14.09.89**

(54) Verfahren zur Herstellung von niederen Natriumpolysulfiden aus höheren Natriumpolysulfiden und Natrium.

(30) Priorität : **17.09.88 DE 3831737**

(43) Veröffentlichungstag der Anmeldung :
**04.04.90 Patentblatt 90/14**

(45) Bekanntmachung des Hinweises auf die
Patenterteilung :
**03.06.92 Patentblatt 92/23**

(84) Benannte Vertragsstaaten :
**BE DE ES FR GB GR IT**

(56) Entgegenhaltungen :
**EP-A- 0 177 671**
**EP-A- 0 326 914**

(73) Patentinhaber : **Degussa Aktiengesellschaft**
**Weissfrauenstrasse 9**
**W-6000 Frankfurt am Main 1 (DE)**

(72) Erfinder : **Bittner, Friedrich, Dr.**
**Mozartstrasse 38**
**W-6232 Bad Soden (DE)**
Erfinder : **Hinrichs, Walter, Dr.**
**Alte Bohle 15**
**W-5040 Brühl (DE)**
Erfinder : **Hovestadt, Herbert, Dr.**
**Kölner Ring 138**
**W-5042 Erfstadt (DE)**
Erfinder : **Lange, Ludwig, Dr.**
**Mühlenbach 40**
**W-5040 Brühl (DE)**
Erfinder : **Splett, Erich**
**Im Bachholz 4**
**W-5030 Hürth-Berrenrath (DE)**

## Beschreibung

Die Erfindung betrifft ein Verfahren zur Herstellung von niederen reinen Natriumpolysulfiden direkt aus höheren Natriumpolysulfiden und Natrium.

Aus Ullmanns Encyklopädie der technischen Chemie, 3. Auflage. Bd. 15, Urban & Schwarzenberg München 1964, S. 526 ist ein Weg zu niederen Natriumpolysulfiden aus höheren Natriumpolysulfiden ersichtlich. Durch Lösen von Schwefel in Natriumsulfid-Lauge wird eine Natriumpolysulfid-Lösung hergestellt, die anschließend mit elektrolytisch hergestelltem Natriumamalgam zu dem gewünschten niederen Polysulfid umgesetzt wird; die wäßrige Lösung des Polysulfids muß dann auf Festprodukt aufgearbeitet werden.

Aus der DE-A-34 36 698 (entspricht EP-A-01 77 671) ist ein Verfahren zur Herstellung von Natriumpolysulfiden, vorzugsweise Natriumtetrasulfid $Na_2S_4$ und Polysulfid der stöchiometrischen Zusammensetzung $Na_2S_3$, aus den Elementen Natrium und Schwefel in hochreiner, absolut wasser- und lösungsmittelfreier Form bekannt, das dadurch gekennzeichnet ist, daß man das Natrium und den Schwefel unter Schutzgas in einem dem gewünschten Polysulfid entsprechenden stöchiometrischen Verhältnis abwechselnd in eine vorgelegte Schmelze eines Polysulfids unter kräftigem Rühren in derart bemessenen Portionen eindosiert, daß beim Natriumeintrag selbst bei Bildung solcher niederer Polysulfid-Zwischenprodukte, die in der schmelzflüssigen Vorlage in heterogener Phase vorliegen, die Reaktionsmischung im Zustand einer rührfähigen Suspension verbleibt und daß man beim Eintrag des Schwefels diesen jeweils vollständig zu einem Polysulfid eines höheren Schwefelgehaltes abreagieren läßt. Beim Eintrag des Natriums in eine vorgelegte Natriumtetrasulfidschmelze können nämlich intermediär neben niederen Polysulfiden, z. B. Natriumtrisulfid oder Natriumdisulfid, auch andere Polysulfide mit jeweils höheren Schmelzpunkten als die der vorstehend genannten Verbindungen gebildet werden.

Welches Polysulfid bei diesem Verfahren gebildet wird, hängt von der jeweiligen Einstellung des stöchiometrischen Verhältnisses bei der alternierenden Chargierung der Reaktionspartner ab. Die äußerst heftige Reaktion der reinen Elemente miteinander wird gemildert, indem z. B. bei einer Darstellung von Natriumtetrasulfid das Natrium nicht direkt mit dem elementaren Schwefel in Kontakt gebracht wird, sondern in kleinen Teilmengen und in dünnem Strahl in eine kräftig gerührte, ca. 300° C heiße Tetrasulfid-Schmelze (Smp. $Na_2S_4$ = 285° C) eingetragen wird, wobei intermediär niedere Polysulfide, z. B. der stöchiometrischen Zusammensetzung bzw. Summenformel $Na_2S_3$ oder $Na_2S_2$ und andere Polysulfide mit jeweils höheren Schmelzpunkten gebildet werden, die durch Nachchargierung der erforderlichen Teilmengen an Schwefel wieder in das gewünschte Polysulfid, also $Na_2S_4$, rücküberführt werden.

Bei dem vorstehend besprochenen Verfahren hat sich die alternierende Chargierung der Elemente Natrium und Schwefel in die Polysulfidvorlage jedoch relativ zeit- und arbeitsaufwendig gestaltet. Eine Lösung dieses Problems ist in der EP-A-03 26 914 (veröffentlicht nur 09.08.1989) beschrieben. Das betreffende verbesserte Verfahren sieht vor, daß man das Natrium und den Schwefel in schmelzflüssiger Form gleichzeitig an örtlich auseinanderliegenden Stellen eines zylindrischen Reaktors, dessen Durchmesser so bemessen ist, daß eine zuverlässige Trennung der Zone der Reaktion zwischen Natrium und Polysulfid von der Zone der Reaktion zwischen Schwefel und Polysulfid gewährleistet ist, zuführt, wobei die Schwefel-Zugabe außerhalb der Zone der Reaktion zwischen Natrium und Polysulfid und in der Rührströmung möglichst weit vor der Zugabestelle für das Natrium erfolgt.

Beiden älteren Verfahren ist gemeinsam, daß einer als Reaktionsmedium dienenden Schmelze eines in kleiner Menge durch direkte Umsetzung von Schwefel mit Natrium erhaltenen Polysulfids Natrium und Schwefel im gewünschten stöchiometrischen Verhältnis unter alternierender oder gleichlaufender Dosierung zugegeben wird.

Da sich in der Praxis das Bedürfnis ergab bzw. abzeichnet, bereits hergestellte und gelagerte oder aus gebrauchten Natrium/Schwefel-Batterien stammende höhere Polysulfide in Polysulfide mit einem definierten niedrigeren Schwefelgehalt umzuarbeiten, beruht eine Aufgabe der Erfindung darin, dafür ein vereinfachtes Verfahren zur Verfügung zu stellen.

Eine weitere Aufgabe ist darin zu sehen, für die wegen der hohen Arbeitstemperaturen bei der Herstellung von Dinatriumdisulfid $Na_2S_2$ (> 450° C) kritische Handhabung von Schwefel eine andere Lösung zu finden.

Die Erfindung eröffnet unabhängig voneinander beschreitbare Lösungswege, die jedoch ein einheitliches Prinzip verwenden. Dieses ist darin zu sehen, daß man im Unterschied zu den Verfahren gemäß der DE-A-34 36 698 und der DE-A-03 26 914 die Zugabe von Schwefel und Natrium zu einer vorgelegten Polysulfidschmelze durch ein Vorlegen des als Ausgangsmaterial dienenden Polysulfids mit nachfolgender Zugabe von Natrium oder durch ein abwechselndes oder gleichzeitiges Zugeben von Ausgangsmaterial und Natrium in eine vorgelegte Schmelze eines vorzugsweise die Zusammensetzung des gewünschten Endprodukts aufweisenden Polysulfids ersetzt.

Gegenstand der Erfindung ist ein Verfahren zur Herstellung von niederen Natriumpolysulfiden aus höheren Natriumpolysulfiden und Natrium, welches dadurch gekennzeichnet ist, daß man das höhere Natriumpolysulfid unter Schutzgas in schmelzflüssiger Form vorlegt und entweder a) das Natrium allein oder b) das Natrium und das höhere Natriumpolysulfid zusammen zugibt, wobei die Zugabe in einem dem gewünschten Polysulfidprodukt entsprechenden stöchiometrischen Verhältnis unter kräftigem Rühren der Schmelze in derartigen Mengen erfolgt, daß die Reaktionsmischung im Zustand einer rührfähigen Suspension verbleibt und das Rühren bis zur vollzogenen Bildung des Produkts fortgesetzt wird.

Das Verfahren gemäß Version a) erlaubt die Verwendung vereinfachter Apparaturmittel, weil die Gesamtmenge an umzuarbeitendem Produkt auf einmal, z. B. als Feststoff, vorgelegt und im Reaktor selbst erschmolzen werden kann und weil auf die umfangreichen Einrichtungen zum Aufschmelzen und Flüssigdosieren von Schwefel verzichtet werden kann, welche bei den beschriebenen bekannten Verfahren unabdingbar sind. Verluste durch Verdampfung von Schwefel entfallen. Die apparative Vereinfachung ist gerade bei der Herstellung von $Na_2S_2$ sehr günstig, da wegen des hochliegenden Schmelzpunkts dieser Verbindung alle Apparateteile aus besonders Schmelze-resistenten Werkstoffen bestehen müssen.

Eine erste Ausführungsform der Version b) des erfindungsgemäßen Verfahrens besteht darin, daß man das höhere Polysulfid und das Natrium abwechselnd zugibt, wobei beim Natriumeintrag die Reaktionsmischung im Zustand einer rührfähigen Suspension verbleibt und daß man beim Eintrag des Polysulfids dieses jeweils zu dem Polysulfidprodukt mit dem gewünschten Schwefelgehalt abreagieren läßt.

Eine zweite Ausführungsform von Version b) des erfindungsgemäßen Verfahrens besteht darin, daß man das höhere Polysulfid und das Natrium gleichzeitig an örtlich auseinanderliegenden Stellen eines zylindrischen Reaktors zugibt, dessen Durchmesser so bemessen ist, daß eine zuverlässige Trennung der Zone der Reaktion zwischen Natrium und Polysulfidschmelze von der Zone, in der das höhere Polysulfid eingebracht wird, gewährleistet ist, wobei die Zugabe des höheren Polysulfids außerhalb der Zone der Reaktion zwischen Natrium und Polysulfidschmelze und in der Rührströmung möglichst weit vor der Zugabestelle für das Natrium erfolgt und wobei das Rühren bis zur vollzogenen Bildung des Polysulfidprodukts fortgesetzt wird.

Diese beiden Verfahrensvarianten von Version b) sind hinsichtlich der chemischen Zusammensetzung des vorzulegenden Polysulfids flexibel. So kann z. B. zur Herstellung von $Na_2S_2$ vorgelegtes $Na_2S_2$ mit Polysulfiden der Zusammensetzungen $Na_2S_3$ bis $Na_2S_5$ und Natrium umgesetzt werden oder es kann zur Herstellung von $Na_2S_3$ entweder vorgelegtes $Na_2S_3$ mit $Na_2S_4$ oder $Na_2S_5$ und Natrium umgesetzt werden oder aber vorgelegtes $Na_2S_2$ mit $Na_2S_4$ oder $Na_2S_5$ und Natrium umgesetzt werden. Dabei ergibt sich als wesentlicher Vorteil, daß für das Aufschmelzen und Flüssigdosieren des der Vorlage zuzugebenden Polysulfids keine engen Temperaturgrenzen wie bei der bisherigen Schwefelverwendung eingehalten werden müssen.

Neben diesen Vorteilen ergibt sich nicht zuletzt speziell bei der zweiten Verfahresvariante von Version b), daß die Möglichkeit einer Verschleppung frisch zudosierten Schwefels von seiner Eingabestelle in den Bereich der Natriumzugabe entfällt.

Die Unteransprüche 4 bis 7 offenbaren vorteilhafte Ausführungsformen der Verfahrensversionen a) und b), Unteranspruch 8 eine vorteilhafte Ausgestaltung für die erste und zweite Ausführungsform von Version b) und die Unteransprüche 9 und 10 spezielle Ausgestaltungen für die zweite Ausführungsform von Version b).

Die Erfindung wird nachfolgend anhand der Beschreibung konkreter Ausführungsformen von Verfahrensweise und Apparatur, welche gleichermaßen für die Bereitung von $Na_2S_4$, $Na_2S_3$ und auch eines Polysulfids der stöchiometrischen Zusammensetzung $Na_2S_2$ geeignet sind sowie durch drei Verfahrensbeispiele zu der durchgeführten Bereitung der Verbindung $Na_2S_2$ näher erläutert.

Verfahren a): Herstellung von $Na_2S_2$ aus $Na_2S_4$ durch Chargierung von Natrium

Ein Laborreaktor aus V2A mit kräftiger, ebener Bodenplatte war mit einem gegenüber dem Reaktionsmedium resistenten Keramiktiegel aus $Al_2O_3$ ausgekleidet. Der aufgeflanschte Deckel aus V2A war mit einem eingeschraubten Stutzen zum Einfüllen des Natriums, einem unter dem Deckel endenden Einleitungsrohr für das Schutzgas Argon, einem Temperaturfühler-Schutzrohr aus $Al_2O_3$ und je einer Stopfbuchse zur Durchführung der Welle eines Flügelrührers aus Graphit sowie eines in der Höhe verstellbaren abgewinkelten Entleerungsrohres aus $Al_2O_3$ versehen, das am Ende durch einen Stopfen aus Asbest verschlossen werden konnte. Sämtliche mit der Schmelze in Berührung kommenden Reaktorteile bestanden somit aus den genannten schmelzeresistenten Materialien $Al_2O_3$ und Graphit. Bei einer lichten Weite von 13 und einer Höhe von ebenfalls 13 cm konnte der Reaktor max. 1,5 l - entsprechend ca.3 kg - Schmelze aufnehmen.

Vor Beginn der chargenweisen Produktion war der auf einer stufenlos heizbaren elektrischen Platte stehende, am Mantel wärmeisolierte Reaktor mit 2 kg einer ca. 350° C heißen $Na_2S_4$-Schmelze gefüllt. Der geschlossene Reaktor stand dabei unter einem Argondruck von ca. 50 Pa. Vor dem Öffnen des Einfüllstutzens wurde der Argonstrom zur Verhinderung des Eindringens von Luft leicht verstärkt und das auf ca. 110°C erhitzte flüssige Natrium in kleinen Portionen von ca. 3 g mit einer Glaspipette eingespritzt.

Durch die portionsweise Zugabe von Natrium sowie durch die zusätzliche Beheizung des Laborreaktors mit Hilfe der elektrischen Heizung wurde die Temperatur im Reaktor bis auf max. 600° C und damit oberhalb der Schmelztemperatur des angestrebten $Na_2S_2$ von 445° C erhöht. Durch rechtzeitiges Drosseln bzw. Abstellen der Zusatzheizung während der Zudosierung von Natrium wurde sichergestellt, daß die Reaktortemperatur trotz der exothermen Reaktion nie über 600°C anstieg.

Während der portionsweisen Zuchargierung der zur überführung der vorgelegten 2 kg $Na_2S_4$-Schmelze berechneten Natriummenge von 0,527 kg betrug die Rührgeschwindigkeit 200 U/min, sie konnte in den darauffolgenden etwa 2 Stunden zum Lösen des intermediär entstandenen Grießes von $Na_2S$ auf 100 U/min herabgesetzt werden. Der geschlossene Reaktor wurde während dieser Zeit wieder unter einen Argondruck von ca. 50 Pa gesetzt.

Nach den genannten 2 Stunden "Nachreaktion" wurde durch das Einführen einer AlMg3-Pipette in die homogene Schmelze Probematerial zur Analyse entnommen; bei Wiederholung zeigte sich, daß nur selten ein Nachchargieren von Natrium oder $Na_2S_4$ notwendig ist.

Zur Entnahme des Reaktionsproduktes wurde das Entnahmerohr des Reaktors durch die Stopfbuchse bis auf eine Höhe von ca. 3 - 4 cm über Boden abgesenkt, sein über dem Reaktordeckel frei abfallender Schenkel durch ein elektrisches Heizband auf ca. 600°C erwärmt und der Reaktor nach Öffnen des Rohres durch Erhöhung des Innendruckes über die Argonleitung bis auf eine Restmenge von 1,162 kg als Vorlage für die nächste Charge teilentleert.

Die ausfließende Schmelze (1,365 kg) wurde in einer abgedeckten flachen, kalten Wanne von 20 x 30 cm Bodenfläche unter Argonatmospäre aufgefangen und erstarren gelassen.

Mengenberechnung Verfahren gemäß Version a) :

```
Vorlage                        =    2,000 kg Na₂S₄

Natrium-Zugabe                 =    0,527 kg Na

Produktion                     =    2,527 kg Na₂S₂

Produktentnahme                =    1,365 kg Na₂S₂*)

Rest (Vorlage für nächste
Charge)                        =    1,162 kg Na₂S₂


*) Analyse:
   41,74 % Na      (theor. 41,76 % Na)
   58,28 % S_ges.  (theor. 58,24 % S_ges. )
```

Verfahrensvariante b). erste Ausführungsform:

Herstellung von $Na_2S_2$ durch alternierendes Chargieren von Natrium und $Na_2S_4$:

Vor Beginn der chargenweisen Produktion war der unter Verfahrensversion a) ausführlich beschriebene Laborreaktor mit 1,162 kg der nach der Verfahrensbeschreibung a) gewonnenen ca. 550°C heißen $Na_2S_2$-Restschmelze gefüllt. Vor dem Öffnen des Einfüllstutzens wurde der Argonstrom zur Verhinderung des Eindringens von Luft leicht verstärkt und das auf ca. 110°C erhitzte Natrium in kleinen Portionen von ca. 3 g mit einer Glaspipette eingespritzt.

Nach erfolgter Zugabe von zunächst ca. 30 g Natrium wurden über einem auf die Natriumeinfüllöffnung aufgesetzten Trichter die abgewogene, zur Bildung des gewünschten niederen Polysulfids äquivalente Menge festes $Na_2S_4$ in Form von Pellets zugesetzt und erneut 30 g Natrium zuchargiert usw.

Während der portionsweisen Zuchargierung von insgesamt 0,289 kg Natrium und der zur Erzielung des gewünschten Natriumdisulfids berechneten Natriumtetrasulfidmenge von 1,095 kg betrug die Rührgeschwindigkeit 200 U/min, sie konnte in den darauffolgenden etwa 2 Stunden zum Lösen des intermediär entstandenen Grießes von Natriummonosulfid auf 100 U/min herabgesetzt werden. Der geschlossene Reaktor wurde während dieser Zeit wieder unter einen Argondruck von ca. 50 Pa gesetzt.

Durch Drosseln bzw. Abstellen der Heizung während der Zudosierung von Natrium und $Na_2S_4$ wurde sichergestellt, daß die Reaktortemperatur trotz der exothermen Reaktion nie über 600° C stieg. Nach den genannten 2 Stunden Nachreaktion wurde durch das Einführen einer AlMg3-Pipette in die homogene Schmelze Probematerial zur Analyse entnommen; bei Wiederholung zeigte sich, daß nur selten ein Nachchargieren von Natrium oder $Na_2S_4$ notwendig ist.

Zur Entnahme des Reaktionsproduktes wurde das Entnahmerohr des Reaktors durch die Stopfbuchse bis auf eine Höhe von ca. 3 - 4 cm über Boden abgesenkt, sein über dem Reaktordeckel frei abfallender Schenkel durch ein elektrisches Heizband auf ca. 600° C erwärmt und der Reaktor nach Öffnen des Rohres und durch Erhöhung des Innendruckes über die Argonleitung bis auf eine Restmenge von 1,114 kg als Vorlage für die nächste Charge teilentleert.

Die ausfließende Schmelze (1,432 kg) wurde in einer abgedeckten flachen, kalten Wanne von 20 x 30 cm Bodenfläche unter Argonatmosphäre aufgefangen und erstarren gelassen.

Mengenberechnung Verfahrensvariante b), erste Ausführungsform:

```
Vorlage (Rest aus Vorcharge
gemäß Verfahren a)                    =    1,162 kg Na₂S₂

Na-Zugabe                            =    0,289 kg Na

Na₂S₄-Zugabe                         =    1,095 kg Na₂S₄

Produktion                           =    1,384 kg Na₂S₂

Produktentnahme                      =    1,432 kg Na₂S₂*)

Rest (Vorlage für nächste
Charge)                              =    1,114 kg Na₂S₂


*) Analyse:
   41,72 % Na          (theor. 41,76 % Na)
   58,26 % S_ges.      (theor. 58,24 % S_ges.)
```

Verfahrensvariante b), zweite Ausführungsform:

Herstellung von $Na_2S_2$ durch gleichzeitiges Chargieren von Natrium und $Na_2S_4$:

Die gleichzeitige Chargierung von Natrium und $Na_2S_4$ wurde in einem aufrecht stehenden zylindrischen V2A-Technikumsreaktor durchgeführt, der wegen der aggressiven Schmelze bei der benötigten hohen Temperatur von bis zu 600° C mit einem Graphittiegel (Boden und Seitenwand) ausgekleidet war. Bei einer lichten Weite von 56 cm und einer Höhe von 80 cm konnte er bis zu ca. 250 kg Schmelze aufnehmen.

Durch den Reaktordeckel aus V2A war zentrisch ein stufenlos einstellbares Rührwerk eingelassen und aufgeflanscht. Der Deckel war mit weiteren Stutzen zur Aufnahme eines Fühlers zur Messung der Schmelzetemperatur, der Inertgaszuführung, des durch eine Klappe verschließbaren Kamins zur Abführung des Inertgases und des absenkbaren Rohres zur Fertigproduktentnahme und zur Einführung einer Probenahme-Vorrichtung versehen. Das freie Ende des Fertigproduktentnahmerohres endete in einer abgedeckten von Argon durchspülten flachen Wanne aus V2A (Abmessungen 200 x 90 x 14 cm) zur Aufnahme der produzierten $Na_2S_2$-Schmelze.

Auf einer Achse diesseits und jenseits der Rührerwelle waren auf dem Deckel je ein Stutzen zur Aufnahme der Natrium- und $Na_2S_4$-Düse aufgeschweißt, und zwar der Natriumstutzen auf dem halben Radius und der Polysulfidstutzen auf 1/4 Radius von der zentrischen Rührerwelle aus gemessen. Dadurch wurde erreicht, daß das aus der $Na_2S_4$-Düse (Düsendurchmesser = 3,35 mm) austretende Polysulfid als Vollstrahl in die durch das Rührorgan erzeugte zirkulierende Schmelzeströmung sich ausbildende Thrombe eingespritzt und das Natrium (Düsendurchmesser = 2,55 mm) außerhalb der Thrombe der vorgelegten Schmelze zugeführt wurde.

Oberhalb des Reaktors befanden sich je ein Vorratsbehälter für Natrium (V2A, 60 l) und $Na_2S_4$ (V2A mit AlMg3-Auskleidung, 95 l) mit angeschlossenen Dosiergefäßen zur Aufnahme der beiden Reaktanden Natrium und Polysulfid.

Die Volumina dieser Gefäße waren so bemessen, daß je Arbeitstakt als Teilmengen 2,180 kg Natrium und 8,260 kg $Na_2S_4$ (Stöchiometrie) mit Hilfe von Argon über die Düsen in den Reaktor gedrückt werden konnten.

Die wärmeisolierten Vorratsbehälter und Dosiergefäße waren wie die Rohrleitungen elektrisch beheizt. Im Natriumbereich war die Temperatur auf 130° C eingeregelt und im Bereich $Na_2S_4$ auf 330° C. Der Reaktor wurde durch eine elektrische Begleitheizung auf einer Mindesttemperatur von 550° C gehalten, ebenso wie das stets wärmeisolierte Produktentnahmerohr. Zur Abführung der Reaktionswärme wurde die Heizung des Reaktors abgestellt und die Wärmeisolierung entfernt.

Sämtliche produktberührten Teile der Anlage bestanden wegen der unterschiedlichen Anforderungen an die Korrosionsbeständigkeit aus folgenden Materialien: Im Natriumbereich aus V2A, im $Na_2S_4$-Bereich aus AlMg3 und $Al_2O_3$, im $Na_2S_2$-Bereich aus Graphit, SiC und $Al_2O_3$.

Zur Vorbereitung der Produktion von $Na_2S_2$ wurde zunächst das Polysulfid-Vorratsgefäß über einen Einfüllstutzen mit einem Überschuß an $Na_2S_4$-Pellets (ca. 130 kg) gefüllt und das Festprodukt unter Argonatmosphäre aufgeschmolzen. Anschließend wurde das Natriumvorratsgefäß durch Aufsetzen und Anschließen eines Transportgefäßes ebenfalls mit einem Überschuß an flüssigem Natrium (ca. 40 kg) unter Argonabdeckung gefüllt.

Nach dem Aufschmelzen des $Na_2S_4$-Vorrats wurde eine exakt abgemessene Menge geschmolzenes Tetrasulfid über eine Pendelleitung in das zugehörige Dosiergefäß (8,260 kg) überführt und in gleicher Weise das Dosiergefäß für Natrium (2,180 kg) gefüllt.

Vor der ersten gleichzeitigen Chargierung von Natrium und Natriumtetrasulfid in den Reaktor, der bei einer Temperatur von 550° C noch 104,360 kg schmelzflüssig gehaltenes Natriumdisulfid als Rest aus der Vorcharge enthielt, wurde die elektrische Reaktorheizung abgestellt und zur besseren Abführung der Reaktionswärme über die Reaktorwand die Isolierung entfernt. Nach Öffnen der Kaminklappe und Spülen des Reaktors durch einen geringen Argonstrom (ca. 100 1/h) und nach Vorlegen eines Argondruckes von ca. 1 bar auf die Dosiergefäße wurden bei laufendem Rührwerk (120 U/min) über beide 3-Wegehähne zunächst das Tetrasulfid und unmittelbar darauf das Natrium in den Reaktor überführt.

Unter den angegebenen Bedingungen wurden in einem ersten Takt die in den Dosiergefäßen enthaltenen Gesamtmengen an Natrium in etwa 45 sec und das Tetrasulfid in etwa 60 sec dosiert. Durch die stark exotherme Reaktion bei der Natriumzugabe stieg die Temperatur im Reaktor in der Regel um etwa 40° C auf etwa 590° C an, - 600° C wurden in keinem Fall erreicht oder gar überschritten. Während einer Abkühlzeit von etwa 12 - 15 Minuten wurde der zweite Takt vorbereitet, d. h. die beiden Dosiergefäße wurden erneut mit den beiden Reaktanden gefüllt und nach Erreichen einer Reaktortemperatur von ca. 550° C wurde erneut chargiert usw.

Nach 14 Takten waren innerhalb von 3 1/2 - 4 Stunden insgesamt 30,520 kg Natrium und 115,640 kg Natriumtetrasulfid zur Reaktion gebracht und somit 146,160 kg Natriumdisulfid produziert.

Um die Schmelze flüssig zu halten, wurde der Reaktor wieder wärmeisoliert und die Begleitheizung angestellt. Nach 2 Stunden Nachreaktionszeit zum Lösen des intermediär ausgefallenen Natriummonosulfid-Grießes wurde durch kurzes Einführen eines AlMg3-Stabes durch den vorgesehenen Stutzen in die Schmelze Probematerial für eine Analyse entnommen. Bei Wiederholung zeigte sich, daß nur selten ein Nachchargieren von Natrium oder Natriumtetrasulfid notwendig ist.

Zur Überführung des Fertigproduktes in die Wanne wurde die Kaminklappe geschlossen und im Reaktor ein Argondruck von etwa 0,7 bar aufgebaut. Das Fertigproduktentnahmerohr war dabei so tief in die Schmelze eingeführt, daß nur eine Teilentleerung möglich war, so daß als Rest z. B. 98,250 kg Natriumdisulfid als Vorlage für die nächste Charge im Reaktor verblieben. Die in die Wanne abgedrückte Schmelze (152,270 kg $Na_2S_2$) wurde nach dem Erkalten herausgebrochen, zerkleinert und in Stahlfässer a 40 kg abgepackt.

Mengenberechnung Verfahrensvariante b), zweite Ausführungsform:

```
Vorlage (Rest aus Vorcharge)        =  104,360 kg Na₂S₂

Natrium-Zugabe,
14 Takte à 2,180 kg                 =   30,520 kg Na

Na₂S₄-Zugabe,
14 Takte à 8,260 kg                 =  115,640 kg Na₂S₄

Produktion                          =  146,160 kg Na₂S₂

Produktentnahme                     =  152,270 kg Na₂S₂*)

Rest (Vorlage für die nächste
Charge)                             =   98,250 kg Na₂S₂


*) Analyse:
   41,73 % Na         (theor. 41,76 % Na)
   58,29 % S_ges.     (theor. 58,24 % S_ges.)
```

## Patentansprüche

1. Verfahren zur Herstellung von niederen Natriumpolysulfiden aus höheren Natriumpolysulfiden und Natrium,
**dadurch gekennzeichnet,**
daß man das höhere Natriumpolysulfid unter Schutzgas in schmelzflüssiger Form vorlegt und entweder a) das Natrium allein oder b) das Natrium und das höhere Natriumpolysulfid zusammen zugibt, wobei die Zugabe in einem dem gewünschten Polysulfidprodukt entsprechenden stöchiometrischen Verhältnis unter kräftigem Rühren der Schmelze in derartigen Mengen erfolgt, daß die Reaktionsmischung im Zustand einer rührfähigen Suspension verbleibt und das Rühren bis zur vollzogenen Bildung des Produkts fortgesetzt wird.

2. Verfahren zur Herstellung von niederen Natriumpolysulfiden nach Anspruch 1,
**dadurch gekennzeichnet,**
daß man gemäß Alternative b) das höhere Polysulfid und das Natrium abwechselnd zugibt, wobei beim Natriumeintrag die Reaktionsmischung im Zustand einer rührfähigen Suspension verbleibt und man beim Eintrag des Polysulfids dieses jeweils zu dem Polysulfidprodukt mit dem gewünschten Schwefelgehalt abreagieren läßt.

3. Verfahren zur Herstellung von niederen Natriumpolysulfiden nach Anspruch 1,
**dadurch gekennzeichnet,**
daß man gemäß Alternative b) das höhere Polysulfid und das Natrium gleichzeitig an örtlich auseinanderliegenden Stellen eines zylindrischen Reaktors zugibt, dessen Durchmesser so bemessen ist, daß eine zuverlässige Trennung der Zone der Reaktion zwischen Natrium und Polysulfidschmelze von der Zone, in der das höhere Polysulfid eingebracht wird, gewährleistet ist, wobei die Zugabe des höheren Polysulfids außerhalb der Zone der Reaktion zwischen Natrium und Polysulfidschmelze und in der Rührströmung möglichst weit vor der Zugabestelle für das Natrium erfolgt und wobei das Rühren bis zur vollzogenen Bildung des Polysulfidprodukts fortgesetzt wird.

4. Verfahren nach den Ansprüchen bis 3,
**dadurch gekennzeichnet,**
daß man die Temperatur der vorgelegten Schmelze über die Geschwindigkeit des Natriumeintrags und/oder durch Wärmeabfuhr im Bereich von 300 - 600° C hält.

5. Verfahren nach den Ansprüchen 1 bis 4,
**dadurch gekennzeichnet,**
daß bei der Herstellung von Na₂S₂ die Temperatur der vorgelegten Schmelze 450 - 600° C, von Na₂S₃ 350 - 400° C und von Na₂S₄ 300 - 350° C beträgt.

6. Verfahren nach den Ansprüchen 1 bis 5,
**dadurch gekennzeichnet,**
daß man die Reaktion in einem Reaktor durchführt, dessen mit der Schmelze in Berührung kommende Teile für die Gewinnung von $Na_2S_4$ und $Na_2S_3$ aus Aluminium-Legierungen, insbesondere AlMg3 oder AlMn oder $Al_2O_3$ oder Glaskohlenstoff und für die Gewinnung von $Na_2S_2$ aus Glaskohlenstoff oder Keramik, insbesondere aus $Al_1O_3$, $SiO_2$ oder SiC oder Graphit bestehen oder mit diesen Werkstoffen ummantelt bzw. ausgekleidet sind.

7. Verfahren nach den Ansprüchen 1 bis 6,
**dadurch gekennzeichnet,**
daß man als Schutzgas ein Inertgas. vorzugsweise Argon, einsetzt.

8. Verfahren nach den Ansprüchen 2 bis 7,
**dadurch gekennzeichnet,**
daß man das Natrium und das höhere Polysulfid in schmelzflüssiger oder fester Form zudosiert.

9. Verfahren nach den Ansprüchen 3 bis 8,
**dadurch gekennzeichnet,**
daß man in die von einem zentrisch im Reaktor angeordneten Rührorgan erzeugte zirkulierende Strömung das Natrium außerhalb der Thrombe und das höhere Polysulfid in die Thrombe jeweils als aus einer Düse austretenden Vollstrahl der vorgelegten Schmelze zuführt.

10. Verfahren nach den Ansprüchen 3 bis 9,
**dadurch gekennzeichnet,**
daß man die Natriumdüse gegebenenfalls zum Schutz vor Schwefeldämpfen und Polysulfidaerosolen mit dem Schutzgas umspült und einen gegebenenfalls unterhalb der Düse angebrachten Kugelhahn, dessen Durchlaßquerschnitt ein Vielfaches des Durchmessers des Natriumvollstrahls beträgt, nach Beendigung der Natriumzufuhr schließt.

## Claims

1. A process for the preparation of lower sodium polysulphides from higher sodium polysulphides and sodium,
characterised in that
the higher sodium polysulphide is presented in a molten form under a protective gas and to it is added either a) the sodium alone or b) the sodium together with the higher sodium polysulphide, the addition being carried out with vigorous stirring of the melt in a stoichiometric ratio corresponding to the desired polysulphide product and in such quantities that the reaction mixture remains in the state of a stirrable suspension and stirring is continued until formation of the product has been completed.

2. A process for the preparation of lower sodium polysulphides according to Claim 1,
characterised in that
according to alternative b), the higher polysulphide and the sodium are added alternately, the reaction mixture remaining in the state of a stirrable suspension during introduction of the sodium, and when the polysulphide is introduced, the latter is left to react to form the polysulphide product having the desired sulphur content.

3. A process for the preparation of lower sodium polysulphides according to Claim 1,
characterised in that
according to alternative b), the higher polysulphide and the sodium are simultaneously added at different locations of a cylindrical reactor whose diameter is calculated to ensure reliable separation of the zone of reaction between sodium and polysulphide melt from the zone in which the higher polysulphide is introduced, the addition of the higher polysulphide taking place outside the zone of the reaction between sodium and polysulphide melt and as far in front of the point of introduction of the sodium in the stream of stirring as possible, stirring being continued until formation of the polysulphide product has been completed.

4. A process according to Claims 1 to 3,
characterised in that
the temperature of the melt initially introduced is maintained in the range of from 300 to 600°C by the speed of introduction of the sodium and/or by the removal of heat.

5. A process according to Claims 1 to 4,
characterised in that
in the preparation of $Na_2S_2$, the temperature of the melt initially provided is from 450 to 600°C, that of $Na_2S_3$ is from 350 to 400°C and that of $Na_2S_4$ is from 300 to 350°C.

6. A process according to Claims 1 to 5,
characterised in that

EP 0 361 220 B1

the reaction is carried out in a reactor in which the parts which come into contact with the melt for the production of $Na_2S_4$ and $Na_2S_3$ consist of aluminium alloys, in particular $AlMg_3$ or $AlMn$ or $Al_2O_3$ or of glass carbon and the parts for the production of $Na_2S_2$ consist of glass carbon or ceramic, in particular of $Al_2O_3$, $SiO_2$ or $SiC$ or graphite, or are covered or lined with these materials.

7. A process according to Claims 1 to 6,
characterised in that
the protective gas used is an inert gas, preferably argon.

8. A process according to Claims 2 to 7,
characterised in that
the sodium and the higher polysulphide are added in a molten or solid form.

9. A process according to Claims 3 to 8,
characterised in that
in the circulating stream produced by a stirrer arranged centrally in the reactor, the sodium is introduced into to the melt outside the vortex and the higher polysulphide is introduced into the vortex,in each case as a solid jet from a nozzle.

10. A process according to Claims 3 to 9,
characterised in that
the sodium nozzle is optionally washed by a stream of the protective gas to protect it against sulphur vapours and polysulphide aerosols and a ball valve optionally provided underneath the nozzle and having a flow cross-section amounting to a multiple of the diameter of the solid sodium jet is closed after termination of the supply of sodium.


**Revendications**

1. Procédé d'obtention de polysulfures de sodium inférieurs à partir de polysulfures de sodium supérieurs et de sodium,
caractérisé en ce que
l'on introduit le polysulfure de sodium supérieur sous gaz protecteur sous forme liquide de fusion et on ajoute soit a) le sodium seul, soit b) le sodium et le polysulfure de sodium supérieur ensemble, l'addition dans un rapport stoechiométrique correspondant au produit désiré en polysulfure sous agitation puissante du produit de fusion s'effectuant en quantités telles, que le mélange réactionnel demeure à l'état d'une suspension susceptible d'être agitée et que l'agitation est poursuivie jusqu'à formation complète du produit.

2. Procédé d'obtention de polysulfures de sodium inférieurs,
caractérisé en ce que,
conformément à l'alternative b), on ajoute le polysulfure supérieur et le sodium alternativement, le mélange de la réaction demeurant à l'état d'une suspension susceptible d'être agitée lors de l'introduction du sodium et en ce qu'on fait réagir lors de l'introduction du polysulfure, celui-ci respectivement en un produit polysulfuré ayant la teneur en soufre désirée.

3. Procédé d'obtention de polysulfures de sodium inférieurs selon la revendication 1,
caractérisé en ce que
conformément à l'alternative b), on verse le polysulfure supérieur et le sodium simultanément à des endroits situés éloignés l'un de l'autre localement d'un réacteur cylindrique, dont le diamètre est déterminé de telle sorte qu'une séparation sûre de la zone de réaction entre le sodium et le produit de fusion du polysulfure, de la zone où le polysulfure supérieur a été introduit, soit garantie, l'addition du polysulfure supérieur s'effectuant en dehors de la zone de réaction entre le sodium et le produit de fusion du polysuifure, et dans le courant d'agitation le plus loin possible avant l'endroit d'ajout pour le sodium et l'agitation étant poursuivie jusqu'à formation complète du produit polysulfuré.

4. Procédé selon les revendications 1 à 3,
caractérisé en ce que
l'on maintient la température du produit de fusion introduit par l'intermédiaire de la vitesse de l'introduction du sodium et/ou par l'évacuation de la chaleur, dans la zone de 300 à 600°C.

5. Procédé selon les revendications 1 à 4,
caractérisé en ce que
lors de la production de $S_2Na_2$, la température du produit de fusion introduit s'élève à 450-600°C, celle de $S_3Na_2$ à 350-400 °C et celle de $S_4Na_2$ à 300-350°C.

6. Procédé selon les revendications 1 à 5,
caractérisé en ce que

l'on effectue la réaction dans un réacteur dont les parties qui entrent en contact avec le produit de fusion sont constituées pour la production de $S_4Na_2$ et de $S_3Na_2$, d'alliages d'aluminium, en particulier de $AlMg_3$ ou d'AlMn ou d'$Al_2O_3$ ou de carbone vitrifié et pour la production de $S_2Na_2$ de carbone vitrifié ou de céramique, en particulier d'$Al_2O_3$, $SiO_2$ ou SiC ou de graphite ou bien sont enveloppées ou revêtues de ces matériaux.

7. Procédé selon les revendications 1 à 6,
caractérisé en ce que
l'on met en oeuvre comme gaz protecteur un gaz inerte, de préférence de l'argon.

8. Procédé selon les revendications 2 à 7,
caractérisé en ce que
l'on ajoute, par dosage, le sodium et le polysulfure supérieur sous forme liquide de fusion ou sous forme solide.

9. Procédé selon les revendications 3 à 8,
caractérisé en ce que
l'on amène dans le courant en mouvement, produit par un organe d'agitation disposé centralement dans le réacteur, le sodium en dehors de la "trombe" et le polysulfure supérieur dans la "trombe" respectivement sous forme d'un jet plein du produit de fusion introduit, sortant d'un injecteur.

10. Procédé selon les revendications 3 à 9,
caractérisé en ce que
l'on arrose l'injecteur du sodium en vue de la protection contre les vapeurs de soufre et les aérosols de polysulfure avec le gaz protecteur et que l'on ferme, après l'achèvement de l'amenée du sodium, un robinet à boisseau sphérique appliqué éventuellement en-dessous de l'injecteur et dont la section de passage s'élève à un multiple du diamètre du plein jet de sodium.